# EUROPEAN PATENT APPLICATION

(11) **EP 4 575 282 A1**
(43) Date of publication of application: **25.06.2025**
(21) Application number: 24215678.4
(22) Date of filing: 27.11.2024
(51) Int. Cl.: F16K 17/04, F24D 19/08, F16K 31/44, F16K 31/60, F24D 19/10

(54) **PRESSURE RELIEF VALVE AND STORAGE TYPE WATER HEATER AND AIR HEATER WITH SUCH A PRESSURE RELIEF VALVE**

(30) Priority: 22.12.2023 JP 2023216817
(71) Applicant: Danle Co. Ltd., Chigasaki-shi, Kanagawa 253-0061 (JP)
(72) Inventor: Seki, Masashi, Chigasaki-shi, Kanagawa, 253-0061 (JP); Ishii, Kazutoshi, Chigasaki-shi, Kanagawa, 253-0061 (JP); Akiyama, Ryo, Chigasaki-shi, Kanagawa, 253-0061 (JP)
(74) Representative: Grünecker Patent- und Rechtsanwälte PartG mbB

(57) **Abstract**

An object of the present invention is to provide a pressure relief valve that can open and stay open when internal pressure of a fluid passage increases to abnormally high level and whose valve mechanism is not complicated.

[Disclosure of the Invention] A pressure relief valve comprising a valve mechanism having a valve body, a valve seat, a valve shaft and a spring for forcing the valve body in closing direction, a valve casing for accommodating the valve mechanism, a manual valve opening lever swingably connecting to one longitudinal end portion of the valve shaft projecting outside from the casing through a pin, a first lever movement regulating mechanism for restricting movement of the manual valve opening lever in a predetermined direction other than opening-closing direction of the valve when length of outside projection of the one longitudinal end portion of the valve shaft from the casing is less than a predetermined level so as to keep the manual valve opening lever at a first position related to the predetermined direction and permitting movement of the manual valve opening lever in the predetermined direction when length of outside projection of the one longitudinal end portion of the valve shaft from the casing is greater than or equal to the predetermined level, a resilient body for forcing the manual valve opening lever in the predetermined direction, and a second lever movement regulating mechanism for engaging the manual valve opening lever which has moved to and arrived at a second position related to the predetermined direction so as to restrict movement of the manual valve opening lever and valve shaft connecting to the manual valve opening lever in the closing direction of the valve.

## Description

### Technical Field

The present invention relates to a pressure relief valve.

### Background Art

In Patent Document No.1, Applicant proposed a pressure relief valve that opens when internal pressure of a fluid passage increases beyond a predetermined level, thereby discharging fluid from the passage to the exterior and thus decreasing internal pressure of the passage.

Earlier conventional pressure relief valves were constructed to close, after once opening, as soon as the internal pressure of the fluid passage decreased below the predetermined level. Even if the internal pressure of the fluid passage increased to abnormally high level due to damage of water-related equipment connected to the fluid passage, the conventional pressure relief valve closed after once opening as soon as internal pressure of the fluid passage decreased below the predetermined level. As a result, abnormally high internal pressure of the fluid passage was likely to recur before the cause of the damage of the water-related equipment could be eliminated. The pressure relief valve of Patent Document No.1 is aimed at overcoming this problem of the conventional pressure relief valve. The pressure relief valve of Patent Document No.1 can remain open after once opening in response to increase of the internal pressure of the fluid passage to abnormally high level.

### Patent Document

Patent Document No.1: Japanese Patent Laid-Open No. 2021-032465

### Disclosure of invention

### Problem to be solved

The pressure relief valve of Patent Document No.1 has a problem in that its valve mechanism is complicated owing to the valve casing thereof accommodating a mechanism for keeping the valve opened when the internal pressure of the fluid passage increases to abnormally high level.

An object of the present invention is to provide a pressure relief valve that can open and stay open when internal pressure of a fluid passage increases to abnormally high level and whose valve mechanism is not complicated.

### Means for Achieving the Object

In accordance with the present invention, there is provided a pressure relief valve comprising a valve mechanism having a valve body, a valve seat, a valve shaft and a spring for forcing the valve body in closing direction, a valve casing for accommodating the valve mechanism, a manual valve opening lever swingably connecting to one longitudinal end portion of the valve shaft projecting outside from the casing through a pin, a first lever movement regulating mechanism for restricting movement of the manual valve opening lever in a predetermined direction other than opening-closing direction of the valve when length of outside projection of the one longitudinal end portion of the valve shaft from the casing is less than a predetermined level so as to keep the manual valve opening lever at a first position related to the predetermined direction and permitting movement of the manual valve opening lever in the predetermined direction when length of outside projection of the one longitudinal end portion of the valve shaft from the casing is greater than or equal to the predetermined level, a resilient body for forcing the manual valve opening lever in the predetermined direction, and a second lever movement regulating mechanism for engaging the manual valve opening lever which has moved to and arrived at a second position related to the predetermined direction so as to restrict movement of the manual valve opening lever and valve shaft connecting to the manual valve opening lever in the closing direction of the valve.

A pressure relief valve equipped with a manual valve opening lever located outside a casing is in common use. The manual valve opening lever is provided so that the valve can be forcibly opened by hand in order to wash the valve body, valve seat or the like with fluid that is discharged to the exterior, thereby removing attached foreign substances. In the present invention, a mechanism for maintaining opened condition of the valve when internal pressure of the fluid passage increases to abnormally high level is formed using the manual valve opening lever.

Even if internal pressure of the fluid passage should exceed valve open pressure and the pressure relief valve open, the first lever movement regulating mechanism operates to prevent movement of the manual valve opening lever in a predetermined direction other than opening-closing direction of the valve and the manual valve opening lever is kept at a first position related to the predetermined direction when length of outside projection of the one longitudinal end portion of the valve shaft from the casing is less than a predetermined level so that the manual valve opening lever and the valve shaft move in closing direction when the internal pressure of the fluid passage decreases, and the pressure relief valve closes.

When the internal pressure of the fluid passage becomes abnormally high level, length of outside projection of the one longitudinal end portion of the valve shaft from the casing becomes greater than or equal to the predetermined level, restriction by the first lever movement regulating mechanism is released, the manual valve opening lever is moved in the predetermined direction to a second position related to the predetermined direction by the basing force of the resilient body, and the second lever movement regulating mechanism operates to restrict movement of the manual valve opening lever and the valve shaft in the closing direction, thereby maintaining opened condition of the pressure relief valve.

Valve mechanism of the pressure relief valve does not become complicated because the lever driving mechanism and the lever movement regulating mechanism are located outside the casing.

The opened condition of the pressure relief valve can be released by pushing the manual valve opening lever from the second position toward the first position.

In accordance with a preferred aspect of the present invention, the first lever movement regulating mechanism comprises a surface of the manual valve opening lever directed in the predetermined direction and a projection rising from the outside surface of the casing and capable of abutting on the surface of the manual valve opening lever directed in the predetermined direction and the second lever movement regulating mechanism comprises a surface of the manual valve opening lever directed in closing direction of the valve and a projection rising from the outside surface of the casing and capable of abutting on the surface of the manual valve opening lever directed in the closing direction of the valve.

The first lever movement regulating mechanism can be formed by a surface of the manual valve opening lever directed in the predetermined direction and a projection rising from the outside surface of the casing and capable of abutting on the surface of the manual valve opening lever directed in the predetermined direction and the second lever movement regulating mechanism can be formed by a surface of the manual valve opening lever directed in closing direction of the valve and a projection rising from the outside surface of the casing and capable of abutting on the surface of the manual valve opening lever directed in the closing direction of the valve.

In accordance with a preferred aspect of the present invention, an abutting surface between the surface of the manual valve opening lever directed in closing direction of the valve and the projection rising from the outside surface of the casing at the second position related to the predetermined direction is inclined in the opening direction of the valve from the second position to the first position of the manual valve opening lever.

When the abutting surface between the surface of the manual valve opening lever directed in closing direction of the valve and the projection rising from the outside surface of the casing at the second position related to the predetermined direction is inclined in the opening direction of the valve from the second position to the first position of the manual valve opening lever, resilient force of the spring for forcing the valve body in closing direction can be used to resist movement of the manual valve opening lever from the second position toward the first position so as to prevent undesired return of the manual valve opening lever from the second position toward the first position.

In accordance with a preferred aspect of the present invention, the valve body is provided with a rolling seal diaphragm.

Pressure receiving area of the valve body increases by providing the valve body with a rolling seal diaphragm. Thus, valve opening speed and flow rate of fluid discharge of the pressure relief valve increase and internal pressure of the fluid passage rapidly decreases.

In accordance with a preferred aspect of the present invention, there is provided a storage type water heater comprising a hot water storage unit equipped with a hot water storage tank, a heat source unit equipped with a heat-pump and any one of aforesaid pressure relief valves incorporated in a circulating passage connecting the hot water storage unit with the heat source unit or an air heater comprising an air heating unit equipped with an indoor heat exchanger, a heat source unit equipped with a heat-pump and any one of aforesaid pressure relief valves incorporated in a circulating passage connecting the air heating unit with the heat source unit.

Both storage type water heaters individually comprising a hot water storage unit equipped with a hot water storage tank, a heat source unit equipped with a heat-pump and a circulating passage connecting the hot water storage unit with the heat source unit and air heaters individually comprising an air heating unit equipped with an indoor heat exchanger, a heat source unit equipped with a heat-pump and a circulating passage connecting the air heating unit with the heat source unit are in common use. In either the aforesaid storage type water heater or air heater, a likely cause of abnormally high internal pressure of the circulating passage is mixing of highly pressurized coolant into circulating water in the circulating passage due to malfunction of a water-coolant heat exchanger of the heat pump. In order to combat global warming, hydrocarbons with low global warming potential and flammability, ammonia, and other poisonous liquids are becoming mainstream as coolants used in heat pumps. If an indoor portion of the circulating passage of a storage type water heater or an air heater is damaged, there is a danger of flammable or poisonous coolant being released into the room. The pressure relief valve in accordance with the present invention can prevent such release of the coolant into the interior of the room by releasing coolant mixed in the circulating water to the exterior.

### Brief Description of the Drawings

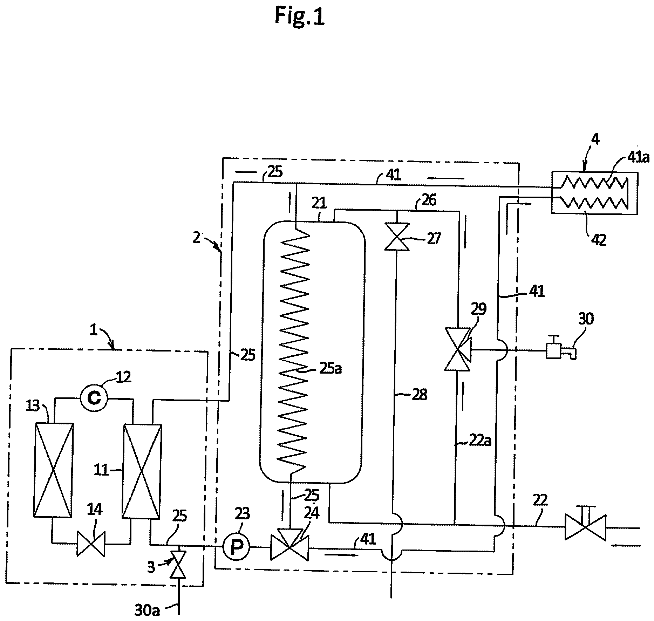

Figure 1 is a block diagram of a storage type water heater combined with an air heater equipped with a pressure relief valve in accordance with a preferred embodiment of the present invention.

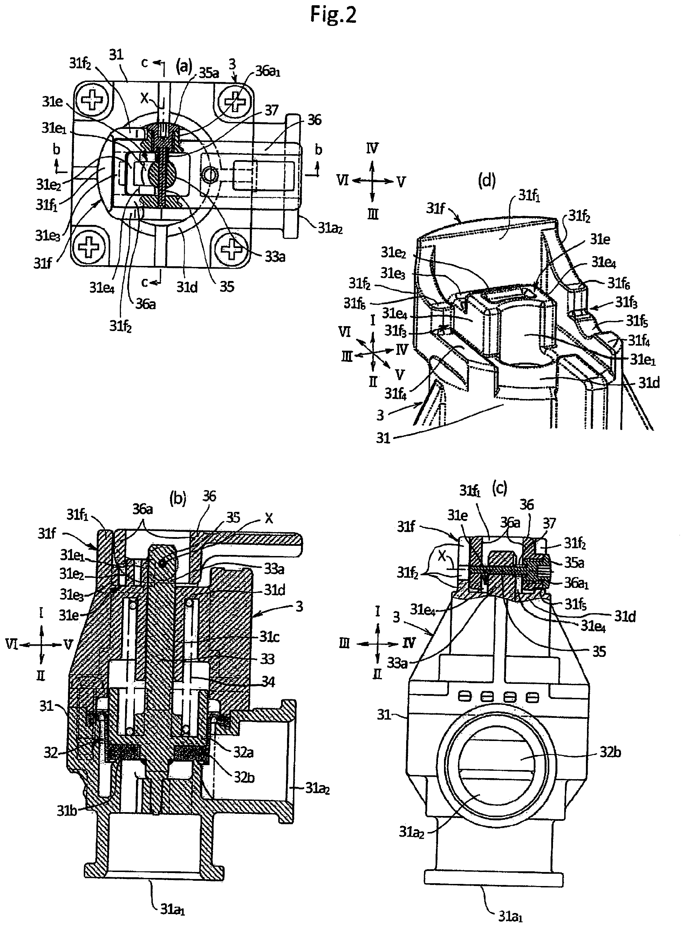

Figure 2 is a set of structural views of a pressure relief valve in accordance with a first preferred embodiment of the present invention, wherein (a) is a top view of the valve in closed condition, partially shown in horizontal section, (b) is a view in the direction of arrows b-b in (a), (c) is a front view partially shown in the direction of arrows c-c in (a), and (d) is a perspective view of projections rising from top wall of a casing.

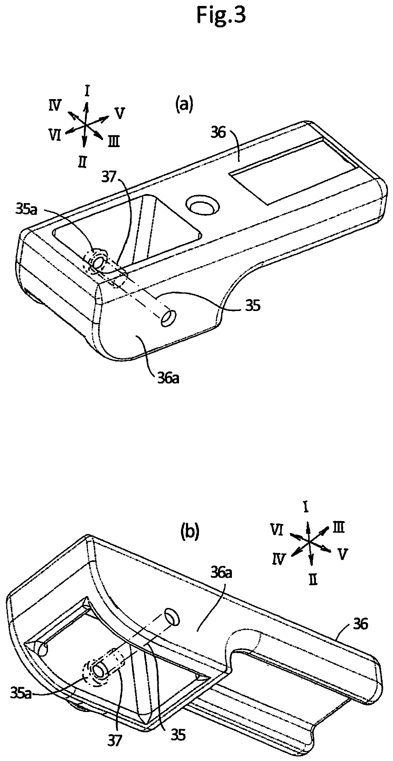

Figure 3 is a set of perspective views of a manual valve opening lever of the pressure relief valve in accordance with the first preferred embodiment of the present invention, wherein (a) is a view as seen from obliquely above and (b) is a view as seen from obliquely below.

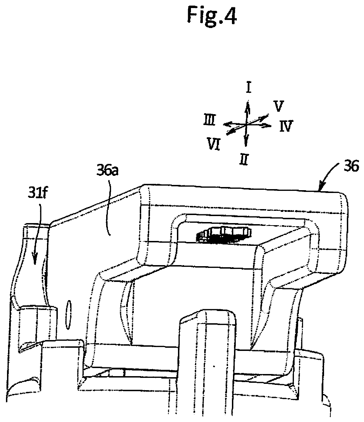

Figure 4 is a perspective view showing correlation between the manual valve opening lever and the projections rising from the top wall of the casing of the pressure relief valve in accordance with the first preferred embodiment of the present invention.

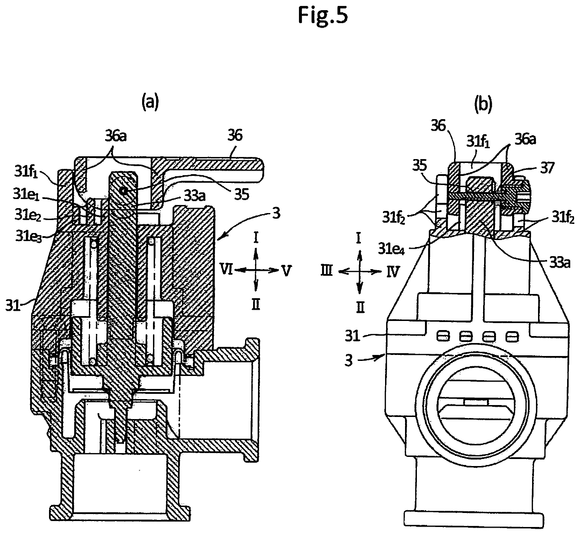

Figure 5 is a set of views showing operation of the pressure relief valve in accordance with the first preferred embodiment of the present invention when internal pressure level of the fluid passage is normal, wherein (a) and (b) correspond to (b) and (c) of Figure 2, respectively.

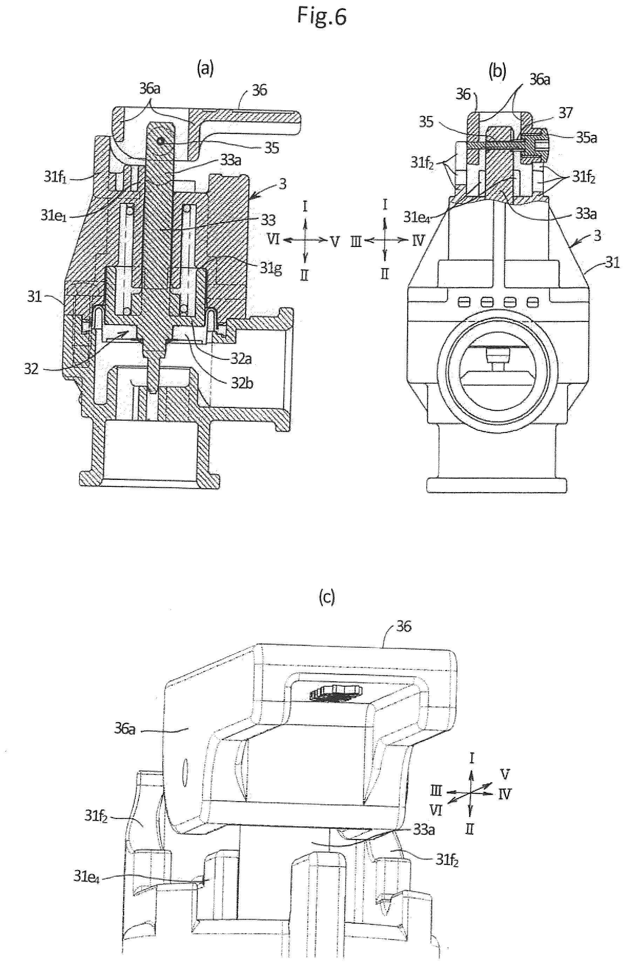

Figure 6 is a set of views showing operation of the pressure relief valve in accordance with the first preferred embodiment of the present invention when internal pressure level of the fluid passage is abnormally high, wherein (a) and (b) correspond to (b) and (c) of Figure 2, respectively, and (c) is a perspective view showing correlation between the manual valve opening lever and the projections rising from the top wall of the casing.

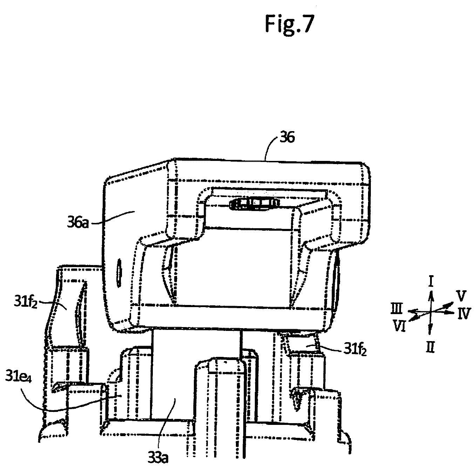

Figure 7 is a perspective view showing correlation between the manual valve opening lever and the projection rising from the top wall of the casing of the pressure relief valve in accordance with the first preferred embodiment of the present invention when internal pressure level of the fluid passage is abnormally high and the manual valve opening lever moves to the right.

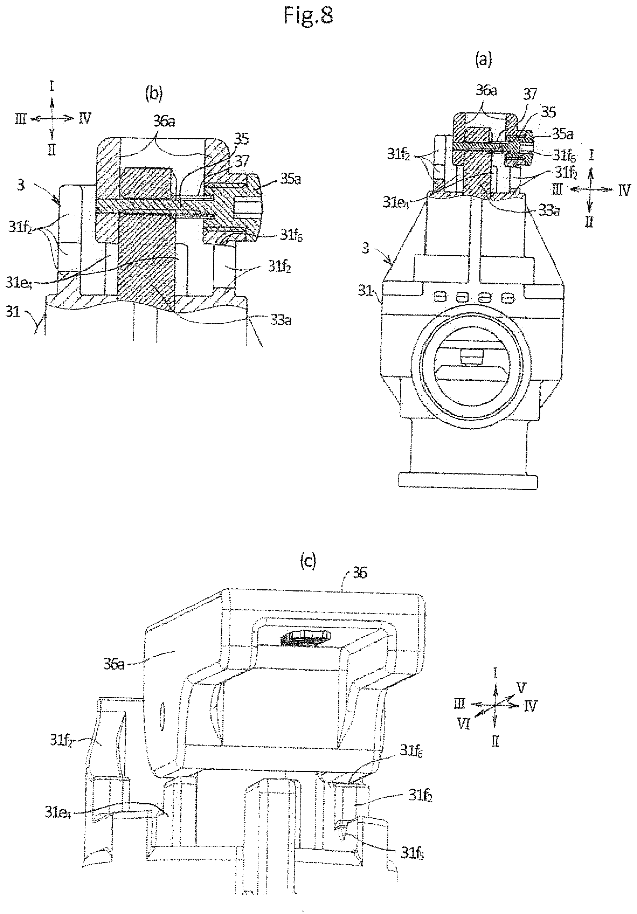

Figure 8 is a set of views showing operation of the pressure relief valve in accordance with the first preferred embodiment of the present invention when internal pressure of the fluid passage decreases from abnormally high level, wherein (a) corresponds to (c) of Figure 2, (b) is a fragmentally enlarged view of (a) and (c) is a perspective view showing correlation between the manual valve opening lever and the projections rising from the top wall of the casing.

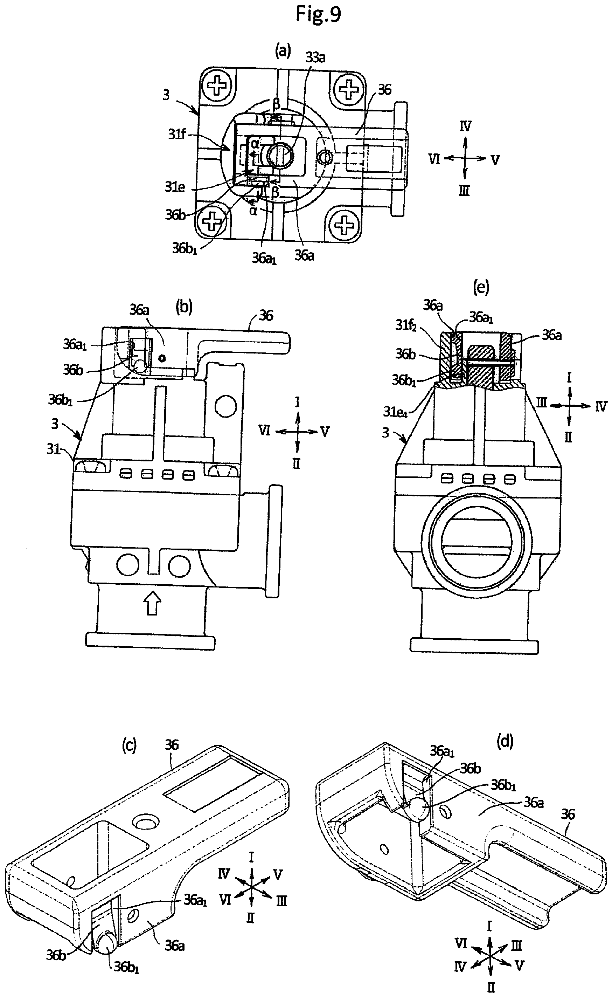

Figure 9 is a set of structural views of a pressure relief valve in accordance with a second preferred embodiment of the present invention, wherein (a) is a top view, (b) is a left side view, (c) is a perspective view of a manual valve opening lever as seen from obliquely above, (d) is a perspective view of a manual valve opening lever as seen from obliquely below and (e) is a front view partially shown by views in the directions of arrows α-α and β-βin (a).

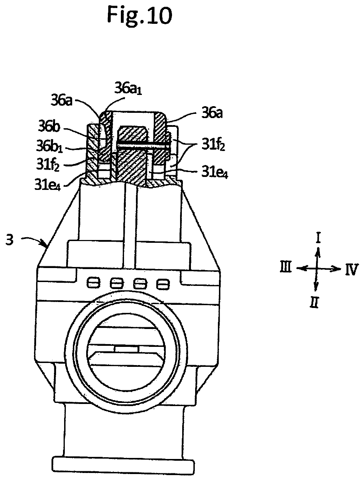

Figure 10 is a view corresponding to Figure 9 (e) showing operation of the pressure relief valve in accordance with the second preferred embodiment of the present invention when internal pressure level of the fluid passage is normal.

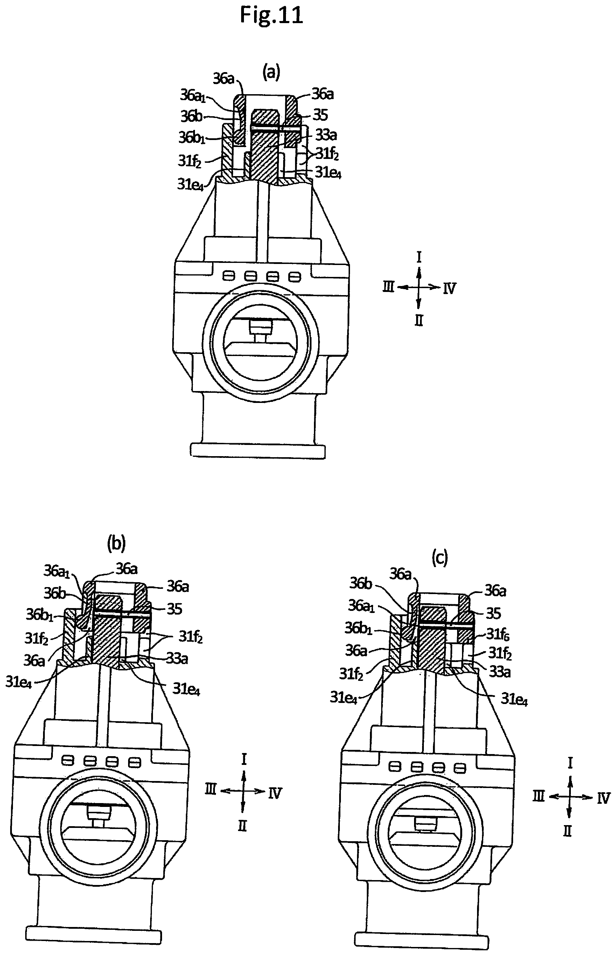

Figure 11 is a set of views corresponding to Figure 9 (e) showing operation of the pressure relief valve in accordance with the second preferred embodiment of the present invention when internal pressure level of the fluid passage is abnormally high, wherein (a) shows state when internal pressure level of the fluid passage becomes abnormally high, (b) shows state when the manual valve opening lever moves to the right under abnormally high internal pressure of the fluid passage and (c) shows state when the internal pressure of the fluid passage decreases from the abnormally high level.

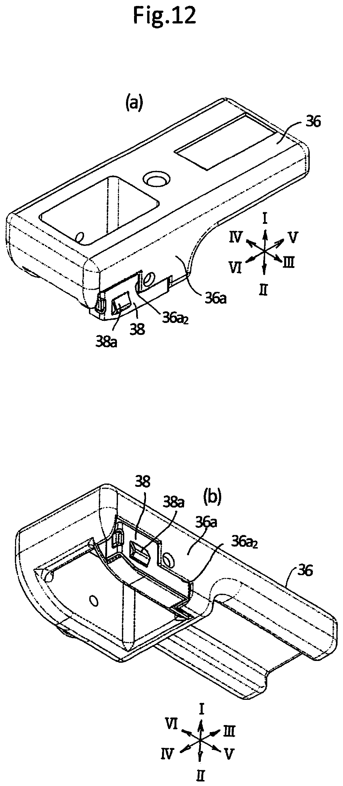

Figure 12 is a set of perspective views of a manual valve opening lever of the pressure relief valve in accordance with a third preferred embodiment of the present invention, wherein (a) is a view as seen from obliquely above and (b) is a view as seen from obliquely below.

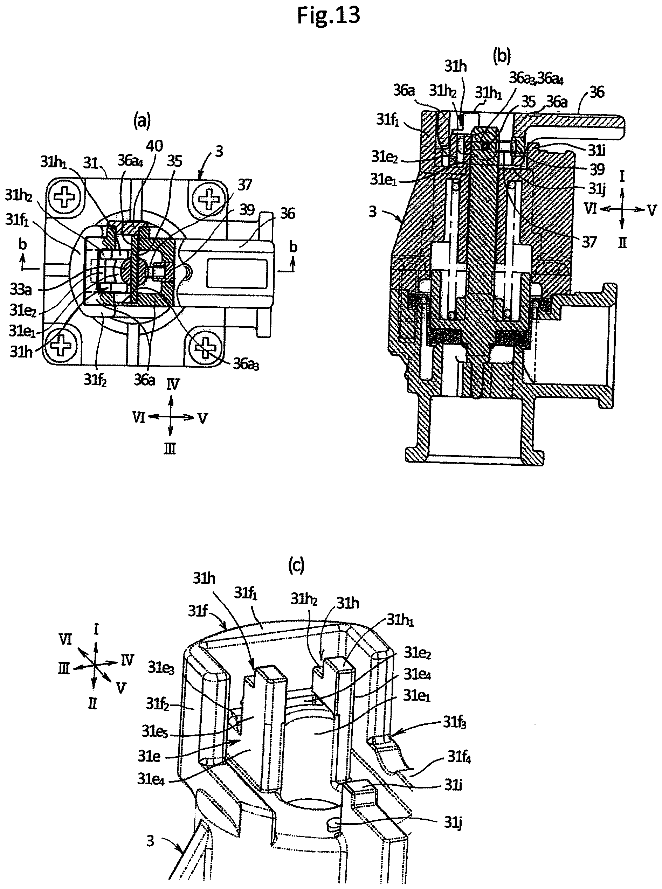

Figure 13 is a set of structural views of a pressure relief valve in accordance with a fourth preferred embodiment of the present invention, wherein (a) is a top view in closed condition, partially shown in horizontal section, (b) is a view in the direction of arrows b-b in (a), and (c) is a perspective view of projections rising from top wall of a casing.

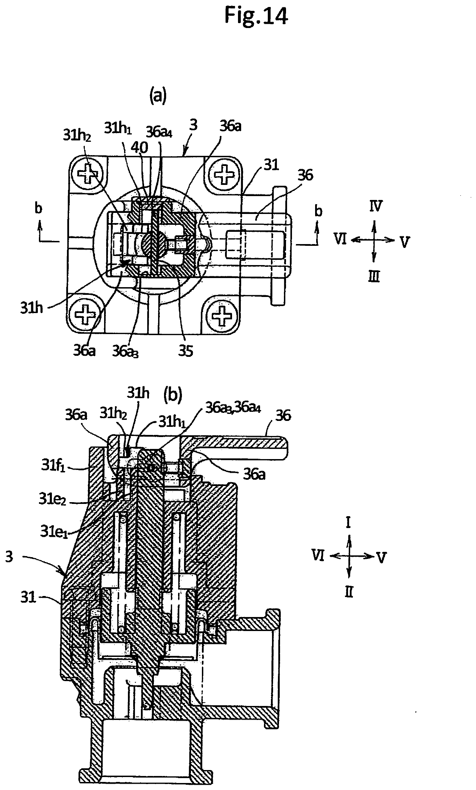

Figure 14 is a set of views showing operation of the pressure relief valve in accordance with the fourth preferred embodiment of the present invention when internal pressure level of the fluid passage is normal, wherein (a) is a top view partially shown in horizontal section and (b) is a view in the direction of arrows b-b in (a).

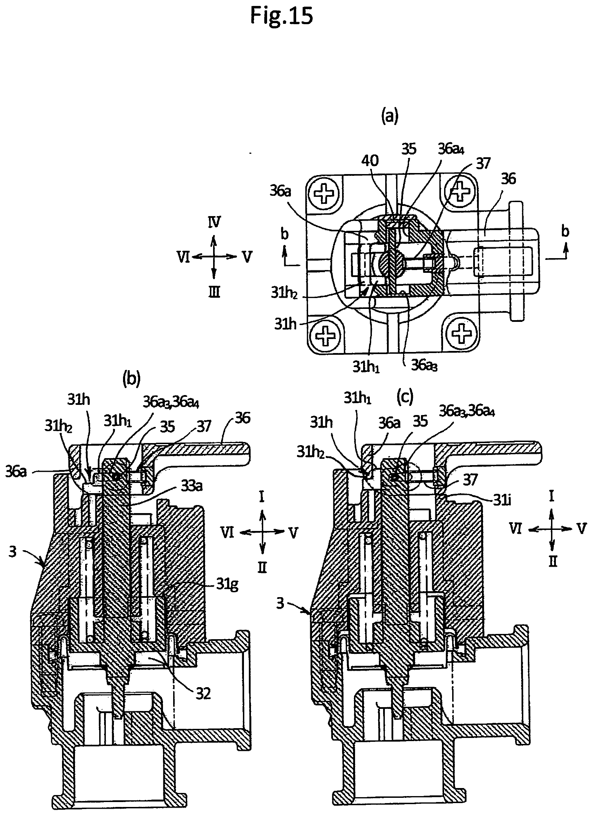

Figure 15 is a set of structural views showing operation of the pressure relief valve in accordance with the fourth preferred embodiment of the present invention when internal pressure level of the fluid passage is abnormally high, wherein (a) is a top view, partially shown in horizontal section, showing state when pressure level of the fluid passage becomes abnormally high, (b) is a view in the direction of arrows b-b in (a) showing state before the manual valve opening lever moves forward and (c) is a view showing state when the internal pressure of the fluid passage decreases from the abnormally high level after the manual valve opening lever moves forward.

### Modes for Carrying Out the Invention

A pressure relief valve in accordance with a first preferred embodiment of the present invention and an example of application of said pressure relief valve to a storage type water heater combined with an air heater will be explained.

As shown in Figure 1, a storage type water heater combined with an air heater is equipped with a heat source unit 1 having a heat pump and generating hot water, and a hot water storage unit 2 having a hot water storage tank.

The heat source unit 1 is provided with a water-coolant heat exchanger 11, a compressor 12, an evaporator 13 and an expansion valve 14 that are successively and circularly connected with each other by a coolant pipe.

The hot water storage unit 2 is provided with a hot water storage tank 21, a water supply pipe 22 connected to lower part of the hot water storage tank 21 and a first circulation passage 25 extending from upper part of the hot water storage tank 21 and passing through the water-coolant heat exchanger 11, a circulation pump 23 and a three-way switching valve 24 through which the first circulation passage 25 passes to a lower part of the hot water storage tank 21 from where it extends upward in the hot water storage tank 21 while forming a heat exchanging pipe 25a and reaches the upper part of the hot water storage tank 21. The hot water storage unit 2 is further provided with a tapping pipe 26 for tapping hot water from upper part of the hot water storage tank 21, a first pressure relief valve 27 connecting to the tapping pipe 26 to protect the hot water storage tank 21, a discharge pipe 28 extending from the first pressure relief valve 27, and a mixing valve 29 connected between the tapping pipe 26 and a branch pipe 22a extending from the water supply pipe 22. A faucet 30 is connected to the mixing valve 29 through a hot water supply pipe.

The storage type water heater combined with an air heater is further provided with a second pressure relief valve 3 connecting to a part of the first circulation passage 25 extending in the heat source unit 1, more specifically, to a part of the first circulation passage 25 closest to the water-coolant heat exchanger 11 on the downstream side, so as to protect the water-coolant heat exchanger 11 and manage damage of the water-coolant heat exchanger 11, and a discharge pipe 30a extending from the second pressure relief valve 3.

The storage type water heater combined with an air heater is further provided with an air heating unit 4. The air heating unit 4 is provided with a second circulating passage 41 whose upstream end connects to the three-way switching valve 24 and downstream end connects to a part of the first circulating passage 25 extending on the downstream side of the hot water storage tank 21, and an indoor heat exchanger 42 disposed in the course of the second circulating passage 41. A part of the second circulating passage 41 extending in the indoor heat exchanger 42 forms a heat exchanging pipe 41a.

In the following description, directions indicated by arrows I, II, III, IV, V and VI in Figures 2 to 15 are called upward direction, downward direction, leftward direction, rightward direction, forward direction and rearward direction respectively.

As shown in Figures 2(a) to 2(c), the second pressure relief valve 3 in accordance with the first preferred embodiment of the present invention is provided with a cylindrical casing 31 extending in upward/downward direction. The casing 31 is provided with an opening 31ai connecting to the first circulating passage 25 at its lower end and an opening 31a₂ connecting to the discharge pipe 30a at front side of lower part of its peripheral side wall. A valve seat 31b is formed on a portion of the casing 31 extending between the openings 31a₁ and 31a₂. A valve element 32 is disposed opposing to the valve seat 31b. The valve element 32 is provided with a valve body 32a and a rolling seal diaphragm 32b attached to the valve body 32a. A valve shaft 33 extends in upward direction from the valve body 32a, slidably passes through a small cylinder 31c located at upper portion of the casing 31 and extends upwardly outside the casing 31. A coil spring 34 engages the valve body 32a and upper end wall 31d of the casing 31 surrounding the small cylinder 31c so as to force the valve body 32a or the valve element 32 in downward direction or closing direction.

A pin 35 extends in leftward/rightward direction and passes slidablly through an upper end portion 33a of the valve shaft 33 extending upwardly outside the casing 31. A manual valve opening lever 36 engages the pin 35 so as to connect to the upper end portion 33a of the valve shaft 33 to be swingable around leftward/rightward direction axis X, which is center axis of the pin 35.

As shown in Figure 3, the manual lever opening lever 36 is provided with a cylinder 36a of rectangular horizontal section and extending in upward/downward direction at rear end portion. The pin 35 penetrates left and right side walls of the cylinder 36a. Head 35a of the pin 35 screws into a right side wall of the cylinder 36a. A coil spring 37 is disposed between the head 35a of the pin 35 and right side surface of the upper end portion 33a of the valve shaft 33 so as to force the head 35a or the manual valve opening lever 36 in the rightward direction.

When the manual valve opening lever 36 is swung clockwise in Figure 2(b), front end wall of the cylinder 36a abuts on the upper end wall 31d of the casing 31. When the manual valve opening lever 36 is further swung clockwise, the lever 36 swings around abutting point between the front end wall of the cylinder 36a and the upper end wall 31d of the casing 31 so as to lift the valve shaft 33, and the second pressure relief valve 3 opens.

As shown in Figures 2(a) and 2(d), a cylindrical first projection 31e of substantially square form as seen from above rises in the upward direction from the upper end wall 31d of the casing 31. The first projection 31e is provided with a front end wall 31e₁ of curved shape as seen from the above and slidably abutting on the upper end portion 33a of the valve shaft 33 so as to guide it, a central partition wall 31e₂ in forward/rearward direction and a rear end wall 31e₃. The front end wall 31e₁ and the central partition wall 31e₂ have the same height greater than that of the rear end wall 31e₃. The first projection 31e is further provided with left and right side walls 31e₄ connecting left and right side ends of the front end wall 31ei, the central partition wall 31e₂ and the rear end wall 31e₃ to one another.

A second projection 31f of gate form as seen from above rises in upward direction from the upper end wall 31d of the casing 31 so as to surround the first projection 31e as seen from above. The second projection 31f is provided with a rear end wall 31f₁ and a pair of side walls 31f₂ extending in forward and downward direction from either side of the rear end wall 31fi. Upper surface of each side wall 31f₂ is provided with a forward directed vertical surface 31f₃ at central portion in forward/rearward direction. As a result, upper surface of the second projection 31f is provided with an upper step formed by upper surface of the rear end wall 31f₁, a pair of middle steps slanted downward and a pair of lower steps 31f₄ extending in forward direction from lower end of the forward directed vertical surface 31f₃. The lower step 31f₄ of the upper surface of right side wall 31f₂ is provided with a curved recess 31f₅. As shown in Figure 2(d), front end portions of the middle steps of the upper surface of the second projection 31f form flat parts 31f₆. The flat parts 31f₆ are flush with portions of the upper surfaces of the side walls 31e₄ extending between the front end wall 31e₁ and the central partition wall 31e₂ of the first projection 31e.

The rear end wall 31e₃ of the first projection 31e and the rear end wall 31fi of the second projection 31f are integrally united.

Operation of the storage type water heater combined with an air heater and the second pressure relief valve 3 will be described.

City water is supplied to the lower part of the hot water storage tank 21 through the water supply pipe 22. The circulation pump 23 operates so that hot water generated by the water-coolant heat exchanger 11 of the heat source unit 1 flows in the heat exchanging pipe 25a through the first circulation passage 25 and the three-way switching valve 24. Cool water flowing into the lower part of the hot water storage tank 21 heat exchanges with hot water flowing through the heat exchanging pipe 25a to become hot water, fill upper part of the hot water storage tank 21, expand with heat, and pressurize the hot water storage tank 21. The water in the heat exchanging pipe 25a whose temperature was decreased by heat exchange with the cool city water returns to the water-coolant heat exchanger 11 through the first circulation passage 25 so as to be heated, becomes hot water and returns to the heat exchanging pipe 25a in the hot water storage tank 21.

Pressurized hot water discharges from upper part of the hot water storage tank 21 through the tapping pipe 26, mixes with city water supplied through the branch pipe 22a at the mixing valve 29, becomes suitable hot water, and discharges from the faucet 30.

When internal pressure of the hot water storage tank 21 rises to a predetermined level A, the first pressure relief valve 27 opens so that high pressure, high temperature water in the hot water storage tank 21 is discharged to the exterior through the discharge pipe 28, thereby reducing internal pressure of the hot water storage tank 21. Thus, damage of the hot water storage tank 21 is prevented. The first pressure relief valve 27 closes after internal pressure of the hot water storage tank 21 is reduced.

Hot water generated by the water-coolant heat exchanger 11 of the heat source unit 1 flows into the heat exchanging pipe 41a extending in the indoor heat exchanger 42 through the first circulation passage 25, the three-way switching valve 24 and the second circulation passage 41. Cool room air sucked into the indoor heat exchanger 42 heat exchanges with hot water flowing in the heat exchanging pipe 41a so that it becomes warm air and returns to the room.

As can be seen from Figures 2 to 4, the rear end cylinder 36a of the manual valve opening lever 36 fits in a space between the first projection 31e and the second projection 31f when the second pressure relief valve 3 shown in Figure 2 is in closed condition. Right side surface of left side wall of the cylinder 36a abuts on left side surface of left side wall 31e₄ of the first projection 31e so that movement of the manual valve opening lever 36 in rightward direction is prevented and the manual valve opening lever 36 is held at first position in relation to the rightward direction. Lower surface of a raised rim 36ai projecting in the rightward direction from right side surface of right side wall of the cylinder 36a and accommodating the head 35a of the pin 35 abuts on the curved recess 31f₅ of the lower step of the upper surface of the right side wall of the second projection 31f so as to prevent movement of the manual valve opening lever 36 and the valve shaft 33 in the closing direction of the second pressure relief valve 3.

As shown in Figure 5, when internal pressure of the first circulation passage 25 exceeds a predetermined level B due to operational failure or the like of the heat source unit 1, the second pressure relief valve 3 opens, high pressure and high temperature water in the first circulating passage 25 is discharged to the exterior, internal pressure of the first circulation passage 25 decreases and damage of the heat source unit 1 is prevented. When internal pressure of the first circulation passage 25 reaches the predetermined level B, length of outside projection of the upper end portion 33a of the valve shaft 33 from the casing 31 is less than a predetermined level so that, as can be seen from Figure 5, the abutment between the right side surface of the left side wall of the cylinder 36a and the left side surface of the left side wall 31e₄ of the first projection 31e is maintained, movement of the manual valve opening lever 36 in the rightward direction is prevented and the manual valve opening lever 36 is held at the first position in relation to the rightward direction. Therefore, when the internal pressure of the first circulation passage 25 decreases, the manual valve opening lever 36 and the valve shat 33 descend, so that the second pressure relief valve 3 closes.

When the water-coolant heat exchanger 11 of the heat source unit 1 incurs damage, high pressure coolant such as ammonia, carbon hydride or the like in the coolant circulation passage of the heat source unit 1 mixes with circulating water in the first circulation passage 25, the internal pressure of the first circulation passage 25 increases beyond the predetermined level B to abnormally high level, and the valve element 32 rises beyond the opening position shown in Figure 5. As shown in Figure 6, the valve element 32 stops upward movement when it abuts on an annular step 31g formed in the casing 31 and the second pressure relief valve 3 becomes full open. As the rolling seal diaphragm 32b increases pressure-receiving area of the valve element 32, the second pressure relief valve 3 quickly becomes full open, flow rate of discharging circulation water quickly increases, and high pressure water and high pressure coolant in the first circulation passage 25 quickly discharge to the exterior. Therefore, even if the first circulation passage 25 should incur damage at a certain part such as the heat exchanging pipe 25a or the second circulation passage 41 should incur damage at a certain part such as the heat exchanging pipe 41a, the flammable or poisonous coolant does not discharge into the interior of the room.

Projection length of the upper end portion 33a of the valve shaft 33 from the casing 31 becomes greater than or equal to the predetermined level midway of full opening of the second pressure relief valve 3. Therefore, as shown in Figure 6, the abutment between the right side surface of the left side wall of the cylinder 36a and the left side surface of the left side wall 31e₄ of the first projection 31e is released in full open condition of the second pressure valve 3. As a result, the manual valve opening lever 36 moves in the rightward direction under biasing force of the coil spring 37 as shown in Figure 7, whereby right side surface of the left side wall of the cylinder 36a abuts on the left side surface of the upper end portion 33a of the valve shaft 33 so that the manual valve opening lever 36 stops movement and is held at a second position in relation to the rightward direction.

When internal pressure of the first circulation passage 25 decreases, the valve element 32, the valve shaft 33 and the manual valve opening lever 36 descend under biasing force of the spring 34. Then, as shown in Figure 8, lower surface of the left side wall of the cylinder 36a abuts on the portion of the upper surface of the left side wall 31e₄ extending between the front end wall 31ei and the middle partition wall 31e₂ of the first projection 31e and lower surface of the right side wall of the cylinder 36a abuts on the front end flat part 31f₆ of the middle step of the upper surface of the right side wall 31f₂ of the second projection 31f, thereby stopping the downward movement of the manual valve opening lever 36 and the valve shaft 33. As a result, the second pressure relief valve 3 is kept open, coolant is surely discharged to the exterior and safety of indoor space is secured. The abnormally high internal pressure of the circulation passage 25 does not recur before the cause is eliminated.

Valve mechanism of the second pressure relief valve 3 does not become complicated because the lever driving mechanism and the lever movement regulating mechanism of the manual valve opening lever 36 are provided outside the casing 31.

The opened condition of the second pressure relief valve 3 can be released by pushing the head 35a of the pin 35 in the leftward direction so as to return the manual valve opening lever 36 to the first position.

A second pressure relief valve 3 in accordance with a second preferred embodiment will be described.

As shown in Figure 9, a cutout 36a₁ is formed in a part of the left side wall of the cylinder 36a and, instead of the coil spring 37 of the first embodiment, a plate spring 36b is formed integrally with the cylinder 36a in the cutout 36ai. The plate spring 36b is so structured that a lower end projection 36bi may protrude in the leftward direction from the cutout 36a₁ in no load condition, as shown in Figure 9(c). Aside from the above feature, structure of the second pressure relief valve 3 in accordance with the second preferred embodiment of the present invention is the same as the structure of the second pressure relief valve 3 in accordance with the first preferred embodiment of the present invention.

When the second pressure relief valve 3 is closed, as shown in Figure 9(d) and 9(e), the lower end projection 36bi of the plate spring 36b is held by the left side wall 31e₄ of the first projection 31e and the left side wall 31f₂ of the second projection 31f, so that the plate spring 36b is pushed into the cutout 36ai. As a result, movement of the manual valve opening lever 36 in the rightward direction is prevented.

The aforesaid state is maintained as shown in Figure 10 when the internal pressure of the circulation passage 25 reaches the predetermined level B and the second pressure relief valve 3 opens because the length of projection of the upper end portion 33a from the casing 31 is less than the predetermined level. Therefore, the second pressure relief valve 3 closes when the internal pressure of the circulation passage 25 decreases.

When the internal pressure of the circulation passage 25 increases to abnormally high level, the second pressure relief valve 3 becomes full open. Projection length of the upper end portion 33a of the valve shaft 33 from the casing 31 becomes greater than or equal to the predetermined level midway of full opening of the second pressure relief valve 3, the lower end projection 36bi of the plate spring 36b is released from hold by the left side wall 31e₄ of the first projection 31e and the left side wall 31f₂ of the second projection 31f as shown in Figure 11(a), the cylinder 36a or the manual valve opening lever 36 moves in the rightward direction under basing force of the plate spring 36b that has been pressed to the left side wall 31f₂ of the second projection 31f at the lower end projection 36bi as shown in Figure 11(b) and left side wall of the cylinder 36a abuts on the upper end portion 33a of the valve shaft 33 so that the manual valve opening lever 36 stops movement and is held at a second position in relation to the rightward direction. When internal pressure of the first circulation passage 25 decreases, the valve element 32, the valve shaft 33 and the manual valve opening lever 36 descend under the basing force of the spring 34. Then, as shown in Figure 11(c), lower surface of the left side wall of the cylinder 36a abuts on the portion of the upper surface of the left side wall 31e₄ of the first projection 31e extending between the front end wall 31e₁ and the middle partition wall 31e₂, lower surface of the right side wall of the cylinder 36a abuts on the front end flat part 31f₆ of the middle step of the upper surface of the right side wall 31f₂ of the second projection 31f, so that the downward movement of the manual valve opening lever 36 or the valve shaft 33 is prevented. As a result, the second pressure valve 3 is kept open.

The opened condition of the second pressure relief valve 3 can be released by pushing right side end of the pin 35 in the leftward direction so as to return the manual valve opening lever 36 to the first position.

A second pressure relief valve 3 in accordance with a third preferred embodiment of the present invention will be described.

As shown in Figure 12, instead of the plate spring 36b of the second preferred embodiment which is formed integrally with the cylinder 36a, a plate spring 38 independent of the cylinder 36a is accommodated in a concave 36b₂ formed in a part of left side surface of the left side wall of the cylinder 36a. A hook shaped front end portion of the plate spring 38 is fitted in a hook shaped slit formed by a front end portion of the concave 36b₂ and a rear end portion of the plate spring 38 is resiliently fitted on an engaging projection formed in a rear end portion of the concave 36b₂ so that the plate spring 38 firmly engages the cylinder 36a. The plate spring 38 is so structured that a lower end projection 38a cut in and raised from the plate spring 38 can protrude in the leftward direction from the concave 36a₂ in no load condition.

Operation of the plate spring 38 is the same as that of the plate spring 36b. Therefore, operation of the second pressure relief valve 3 in accordance with the third preferred embodiment of the present invention is the same as that of the second pressure relief valve 3 in accordance with the second preferred embodiment of the present invention.

A second pressure relief valve 3 in accordance with a fourth preferred embodiment of the present invention will be described.

As shown in Figure 13, the cylinder 36a is provided with an elliptic concave 36a₃ extending in forward/rearward direction in the right side surface of the left side wall and an elliptic opening 36a₄ extending in forward/rearward direction in the right side wall. The pin 35 is passed through and fixed to the upper end portion 33a of the valve shaft 33. Left side end portion of the pin 35 slidably engages the elliptic concave 36a₃ and right side end portion of the pin 35 slidably engages the elliptic opening 36a₄. A coil spring 37 is disposed between a cap 39 screwed into the front end wall of the cylinder 36a and the front side surface of the upper end portion 33a of the valve shaft 33. A cap 40 is fitted in and fixed to a raised rim surrounding the elliptic opening 36a₄ and projecting in the rightward direction from the right side surface of the right side wall of the cylinder 36a. Portions 31e₅ of the right and left side walls 31e₄ of the first projection 31e, which extend between the front wall 31e₁ and the middle partition wall 31e₂, extend in the upward direction above the front wall 31e₁ and the middle partition wall 31e₂. Upper surface of each portion 31e₅ is provided with a rearward directed vertical surface 31h formed between an upper step 31hi and a lower step 31h₂.

As shown in Figure13(b), rear side surface of the lower step 31h₂ is not flush with the rear side surface of the middle partition wall 31e₂ but is slightly offset therefrom in forward direction. By this structural measure, interference between lower part of front surface of the rear side wall of the cylinder 36a and rear end of the lower step 31h₂ is prevented when the manual valve opening lever 36 is swung clockwise in Figure 13(b) so as to manually open the second pressure relief valve 3. Upper end of rear side surface of the middle partition wall 31e₂ is beveled. A third projection 31i is formed on the upper surface of the casing 31 farther toward the front side than the upper end portion 33a of the valve shaft 33.

In aspects other than the aforesaid structures and that upper surface of the side wall 31f₂ of the second projection 31f is not provided with a downwardly inclined middle step, structure of the second pressure relief valve 3 in accordance with the fourth preferred embodiment of the present invention is the same as that of the second pressure relief valve 3 in accordance with the first preferred embodiment of the present invention.

As shown in Figures 13(a) and 13(b), front side surface of the rear side wall of the cylinder 36a abuts on rear side surface of the middle partition wall 31e₂ of the first projection 31e, whereby movement of the manual valve opening lever 36 in forward direction is prevented and the manual valve opening lever 36 is held at a first position in relation to forward direction when the second pressure relief valve 3 is closed. Lower surface of the front side wall of the cylinder 36a abuts on the upper surface of a fourth projection 31j formed on the upper surface of the casing 31 farther toward the front side than the upper end portion 33a of the valve shaft 33, thereby preventing movement of the manual valve opening lever 36 or the valve shaft 33 in the closing direction of the second pressure relief valve 3. Left end portion of the pin 35 abuts on the front end of the elliptical concave 36a₃ and right end portion of the pin 35 abuts on the front end of the elliptical opening 36a₄.

When internal pressure of the first circulation passage 25 exceeds a predetermined level B due to operational failure or the like of the heat source unit 1, the second pressure relief valve 3 opens, as shown in Figure 14. When internal pressure of the first circulation passage 25 reaches the predetermined level B, projection of the upper end portion 33a of the valve shaft 33 from the casing 31 is less than a predetermined level, so that, as can be seen from Figure 14(b), notwithstanding that the front side surface of the rear side wall of the cylinder 36a is released from abutment with the rear side surface of the middle partition wall 31e₂ of the first projection 31e, the front side surface of the rear side wall of the cylinder 36a nevertheless remains abutted on the rear side surface of the lower step 31h₂ of the upper surface of the side wall of the first projection 31e, so that movement of the manual valve opening lever 36 in forward direction is restricted to slight level and the manual valve opening lever 36 is held at approximately the first position in relation to forward direction. Therefore, when the internal pressure of the first circulation passage 25 decreases, the manual valve opening lever 36 and the valve shat 33 descend under the biasing force the spring 34, while the rear side wall of the cylinder 36a being guided by the beveled upper end of the rear side surface of the middle partition wall 31e₂ of the first projection 31e, so that the second pressure relief valve 3 closes.

When the water-coolant heat exchanger 11 of the heat source unit 1 is damaged, high pressure coolant in the coolant pipe mixes with the circulating water in the first circulation passage 25, the internal pressure of the first circulation passage 25 increases to abnormally high level, and the valve element 32 rises beyond the opening position shown in Figure 14(b). The valve element 32 stops moving upward when it abuts on the annular step 31g formed in the casing 31 and the second pressure relief valve 3 becomes full open as shown in Figure 15(b).

Projection of the upper end portion 33a of the valve shaft 33 from the casing 31 becomes greater than or equal to the predetermined level midway of full opening of the second pressure relief valve 3. Therefore, as shown in Figure 15(b), the abutment between the front side surface of the rear side wall of the cylinder 36a and the rear side surface of the lower step 31h₂ of the upper surface of the side wall of the first projection 31e is released in full open condition of the second pressure valve 3. Therefore, as shown in Figures 15(a) and 15(c), the manual valve opening lever 36 moves in the forward direction under biasing force of the coil spring 37 and front side surface of lower part of the rear side wall of the cylinder 36a abuts on the rear side surface of the upper step 31hi of upper surface of the side wall of the first projection 31e. As a result, the manual valve opening lever 36 stops moving and is held at a second position in relation to the forward direction. When internal pressure of the first circulation passage 25 decreases, the valve element 32, the valve shaft 33 and the manual valve opening lever 36 descend under biasing force of the spring 34. Then, as shown in Figure 15(c), the lower surface of the rear side wall of the cylinder 36a abuts on the lower step 31h₂ of the upper surface of the side wall of the first projection 31e and the lower surface of the front side wall of the cylinder 36a abuts on the upper surface of the third projection 31i, thereby preventing downward movement of the manual valve opening lever 36 and the valve shaft 33. As a result, the second pressure valve 3 is kept open.

The opened condition of the second pressure relief valve 3 can be released by pushing front end of the manual valve opening lever 36 in the rearward direction to return the lever 36 to the first position.

In the aforesaid embodiments, each abutting surface between the lower surface of the cylinder 36a and the upper surfaces of the projections 31e, 31f and 31i rising from the outside surface of the casing may be inclined in the upward direction from the second position to the first position of the manual valve opening lever in the predetermined direction.

When the abutting surface between the lower surface of the cylinder 36a and the upper surfaces of the projections are inclined in the upward direction or the opening direction of the valve from the second position to the first position of the manual valve opening lever in the predetermined direction, resilient force of the spring 34 forcing the valve body in closing direction can be used as a resistance against the movement of the manual valve opening lever 36 from the second position toward the first position and thereby prevent undesired return of the manual valve opening lever 36 from the second position to the first position.

### Industrial Applicability of the Invention

The pressure relief valve according to the present invention can be widely used for many purposes and is especially suitable for use as a pressure relief valve incorporated in a circulation passage between a hot water storage unit and a heat source unit having a heat pump of a storage type water heater or as a pressure relief valve incorporated in a circulation passage between an indoor heat exchanger and a heat source unit having a heat pump of an air heater.

Although this invention has been disclosed in the context of certain preferred embodiments, it will be understood by those skilled in the art that the present invention extends beyond the specifically disclosed embodiments and obvious modifications and equivalents thereof. Thus, it is intended that the scope of the present invention should be determined only by a fair reading of the claims.

### Explanation of reference numerals

1 Heat source unit
2 Hot water storage tank unit
27 First pressure relief valve
3 Second pressure relief valve
4 Air heating unit
31 Casing
31e First projection
31f Second projection
31i Third projection
31j Fourth projection
32 Valve element
33 Valve shaft
33a Upper end portion of the valve shaft
35 Pin
36 Manual valve opening lever
36a Cylinder
36a₃ Elliptical concave
36a₄ Elliptical opening
36b Plate spring
37 Coil spring
38 Plate spring

## Claims

1. A pressure relief valve comprising a valve mechanism having a valve body, a valve seat, a valve shaft and a spring for forcing the valve body in closing direction, a valve casing for accommodating the valve mechanism, a manual valve opening lever swingably connecting to one longitudinal end portion of the valve shaft projecting outside from the casing through a pin, a first lever movement regulating mechanism for restricting movement of the manual valve opening lever in a predetermined direction other than opening-closing direction of the valve when length of outside projection of the one longitudinal end portion of the valve shaft from the casing is less than a predetermined level so as to keep the manual valve opening lever at a first position related to the predetermined direction and permitting movement of the manual valve opening lever in the predetermined direction when length of outside projection of the one longitudinal end portion of the valve shaft from the casing is greater than or equal to the predetermined level, a resilient body for forcing the manual valve opening lever in the predetermined direction, and a second lever movement regulating mechanism for engaging the manual valve opening lever which has moved to and arrived at a second position related to the predetermined direction so as to restrict movement of the manual valve opening lever and valve shaft connecting to the manual valve opening lever in the closing direction of the valve.

2. A pressure relief valve of claim 1, wherein the first lever movement regulating mechanism comprises a surface of the manual valve opening lever directed in the predetermined direction and a projection rising from the outside surface of the casing and capable of abutting on the surface of the manual valve opening lever directed in the predetermined direction and the second lever movement regulating mechanism comprises a surface of the manual valve opening lever directed in closing direction of the valve and a projection rising from the outside surface of the casing and capable of abutting on the surface of the manual valve opening lever directed in the closing direction of the valve.

3. A pressure relief valve of claim 2, wherein an abutting surface between the surface of the manual valve opening lever directed in closing direction of the valve and the projection rising from the outside surface of the casing at the second position related to the predetermined direction is inclined in the opening direction of the valve from the second position to the first position of the manual valve opening lever.

4. A pressure relief valve of any one of claims 1 to 3, wherein the valve body comprises a rolling seal diaphragm.

5. A storage type water heater comprising a hot water storage unit equipped with a hot water storage tank, a heat source unit equipped with a heat-pump and a pressure relief valve of any one of claims 1 to 4 incorporated in a circulating passage connecting the hot water storage unit with the heat source unit.

6. An air heater comprising an air heating unit equipped with an indoor heat exchanger, a heat source unit equipped with a heat-pump and a pressure relief valve of any one of claims 1 to 4 incorporated in a circulating passage connecting the air heating unit with the heat source unit.
